# EUROPÄISCHE PATENTANMELDUNG

(11) **EP 0 548 683 A1**
(43) Veröffentlichungstag der Anmeldung: **30.06.1993**
(21) Anmeldenummer: 92121023.3
(22) Anmeldetag: 10.12.1992
(51) Int. Cl.: C08L 71/12, C08L 25/00, C08L 25/06

(54) **Verfahren zur Herstellung thermoplastischer Formmassen auf der Basis von pulverförmigen Polyphenylenethern und vinylaromatischen Polymeren**

(30) Priorität: 21.12.1991 DE 4142578
(71) Anmelder: BASF Aktiengesellschaft, D-67063 Ludwigshafen (DE)
(72) Erfinder: Weiss, Robert, Dr., W-6700 Ludwigshafen (DE); Gottschalk, Axel, Dr., W-6700 Ludwigshafen (DE); Muehlbach, Klaus, Dr., W-6718 Gruenstadt (DE); Hedtmann-Rein, Carola, Dr., W-6945 Hirschberg (DE); Heinz, Robert, W-6800 Mannheim 51 (DE)

(57) **Zusammenfassung**

Zur Herstellung thermoplastischer Formmassen aus pulverförmigen Polyphenylenethern und vinylaromatischen Polymeren durch Schmelzextrusion wird der pulverförmige Polyphenylenether zunächst unter Druck und gegebenenfalls Wärme, vorzugsweise unter einem Druck entsprechend einer Linienkraft von 1 bis 100 kN/cm, zu einem porösen Kompaktat verdichtet und/oder gesintert. Das Kompaktat wird dann in Form von Agglomeraten einer Teilchengröße von etwa 0,5 mm bis etwa 20 mm in einen Extruder oder dergleichen eingespeist, mit dem vinylaromatischen Polymeren und gegebenenfalls weiteren Komponenten vermischt und aufgeschmolzen. Auf diese Weise ergibt sich eine deutliche Verringerung des Feingutanteils des Polyphenylenethers, so daß die Gefahr von Staubexplosionen praktisch nicht mehr besteht. Weitere Vorteile sind eine bessere Dosierbarkeit und verminderte elektrostatische Aufladung der Agglomerate. Die extrudierten Formmassen zeichnen sich durch gute mechanische Eigenschaften sowie eine hohe thermische Stabilität aus.

## Beschreibung

Die Erfindung betrifft ein Verfahren nach dem Oberbegriff des Patentanspruchs 1.

Es ist bekannt, hochmolekulare Polyphenylenether nach deren Herstellung aus einwertigen Phenolen aus der Reaktionslösung in aromatischen Lösungsmitteln mit Methanol zu fällen und das ausgefällte Polymere abzufiltern (US-A-3 661 848). Der getrocknete, pulverförmige Polyphenylenether wird üblicherweise anschließend in einem Extruder mit Styrolpolymeren abgemischt. Die großtechnische Verarbeitung solcher Pulver birgt indes erhebliche Sicherheitsrisiken, da es bei allen anfallenden Transport- und Fördervorgängen, einschließlich der Konfektionierung, zu Staubexplosionen kommen kann. Zudem kann sich das feinteilige Pulver elektrostatisch aufladen, wodurch die Handhabbarkeit und damit die Dosierbarkeit wesentlich erschwert wird. Schließlich führt der dem feinteiligen Pulver anhaftende Luftsauerstoff in Verbindung mit hohen Verarbeitungstemperaturen häufiger zum teilweisen oxidativen Abbau des Polymeren und damit zu einem relativ hohen Schmutzgehalt der Formmasse.

Weiterhin beschreibt die EP-A-0 071 093 ein Verfahren zur Herstellung von Polyphenylenether enthaltenden Formmassen, bei dem Lösungen von Polyphenylenether und anderen Polymeren, z. B. Homo- oder Copolymerisate des Styrols, die gegebenenfalls mit Kautschuk modifiziert sind, in organischen Lösungsmitteln in einem Mehrstufenprozeß durch Verdampfen des Lösungsmittels von diesem befreit werden. Dieses an sich sehr schonend und ökonomisch arbeitende Verfahren befriedigt jedoch nicht in jeder Hinsicht. Für die endgültige Formmassenherstellung müssen die erhaltenen Konzentrate in einem weiteren Konfektionierschritt mit den notwendigen Zusatzstoffen, wie Füllstoffe, mineralische Verstärkungsmaterialien, Färbemittel oder Flammschutzmittel, versetzt werden. Damit einher geht aber eine zusätzliche thermische und mechanische Belastung sowohl des Polyphenylenethers als auch der anderen Konzentratkomponenten, was sich in einer Verschlechterung der thermischen und mechanischen Eigenschaften des Endproduktes niederschlagen kann.

Mit der Erfindung soll ein Verfahren zur Herstellung thermoplastischer Formmassen auf der Basis von pulverförmigen Polyphenylenethern und vinylaromatischen Polymeren geschaffen werden, welches von den vorstehend geschilderten Mängeln frei ist, produktschonend arbeitet und es insbesondere ermöglicht, auf aufwendige Sicherheitseinrichtungen weitgehend zu verzichten.

Zur Lösung dieser Aufgabe werden die im Kennzeichen des Anspruchs 1 enthaltenen Maßnahmen vorgeschlagen.

Zweckmäßige Weiterbildungen des erfindungsgemäßen Verfahrens sind Gegenstand der Unteransprüche 2 bis 4.

Die für das Verfahren in Betracht kommenden pulverförmigen Polyphenylenether (Komponente A) sind bekannt; sie werden aus Phenol, das vorzugsweise in ortho-Stellung ein- oder zweifach durch Alkyl, Alkoxy, Chlor oder Brom substituiert ist, z. B. durch oxidative Kupplung, hergestellt (US-A-3 661 848, 3 378 505, 3 306 874, 3 306 875 und 3 639 656). Die Alkyl- oder Alkoxygruppen, die bevorzugt 1 bis 4 C-Atome enthalten, können ihrerseits durch Chlor oder Brom substituiert sein. Geeignete Polyphenylenether leiten sich beispielsweise ab von 2,6-Diethylphenol, 2-Methyl-6-ethyl-phenol, 2-Methyl-6-propyl-phenol, 2,6-Dipropyl-phenol, 2-Ethyl-6-propyl-phenol, 2,6-Dichlor-phenol und 2,6-Dibromphenol oder von deren Mischungen untereinander oder z. B. mit 2,3,6-Trimethylphenol. Als Komponente A kann auch ein Gemisch verschiedener Polyphenylenether verwendet werden. Besonders geeignet ist Poly-2,6-dimethyl-1,4-phenylen-ether. Bevorzugt sind solche Polyphenylenether, die eine Grenzviskosität von 0,3 bis 0,7 dl/g (gemessen in Chloroform bei 25°C) aufweisen. Auch Mischungen von Polyphenylenethern unterschiedlicher Viskosität sind möglich.

Zur Verarbeitung, d. h. zur Dosierung und Einspeisung in einen Extruder, Kneter oder Walzenmischer wird das pulverförmige Polyphenylenether einer Teilchengröße von im allgemeinen <1 mm in einem ersten Verfahrensschritt in einen kompakten Zustand gebracht. Dieses Verdichten und/oder Sintern erfolgt zweckmäßig unter Druck und gegebenenfalls Wärme, vorzugsweise unter einem Druck entsprechend einer Linienkraft von 1 bis 100 kN/cm, insbesondere 5 und 50 kN/cm, und bei einer Temperatur von etwa 10°C bis etwa 150°C, bevorzugt 20°C bis 50°C.

Hierzu kann der pulverförmige Polyphenylenether beispielsweise in einem Preßwerkzeug einem mit etwa 10 bis 20 kHz oszillierenden Druck von etwa 10 bis 200 bar ausgesetzt werden. Das Pressen ist in der Weise abzustufen, daß sich unterhalb des Kristallitschmelzpunktes eine Korngrenzenhaftung ergibt, die ausreicht, um die einzelnen Partikel zu einem körnigen Kompaktat zu verbinden. Durch Erhöhung der Oszillatorfrequenz oder wahlweise durch Variation der Pressung kann das Kompaktat bis zum Erweichungspunkt erwärmt und in festem Zustand nachfolgend zerkleinert werden.

Für die Verarbeitung großer Mengen Pulver ist ein kontinuierliches Verpressen erforderlich. Hierfür eignen sich sowohl Kompaktoreinrichtungen, z. B. solche der Fa. Bepex GmbH, Leingarten, als auch handelsübliche Tablettierpressen. Kompaktoreinrichtungen bestehen im wesentlichen aus zwei gegenläufig drehenden Walzen und einer Schneckenmaschine mit konischem Trichter und einer Stopfschnecke, über die die Beschickung der Walzen erfolgt. Je nach Produkteigenschaften können Schnecken mit unterschiedlichem Verdichtungsverhalten eingesetzt werden. Es können plattenförmige Kompaktate oder Kompaktate in Form von Profilsträngen kontinuierlich hergestellt werden, die anschließend in weiteren Arbeitsschritten mittels üblicher Zerkleinerungsmaschinen, z. B. Fladenbrecher, und Siebeinrichtungen, z. B. Siebgranulator, zerkleinert und auf die gewünschte Teilchengröße gesiebt werden. Abgesiebtes Produkt wird der Kompaktoreinrichtung wieder zugeführt. Auf die Arbeitsschritte "Zerkleinern" und "Sieben" kann dann verzichtet werden, wenn der pulverförmige Polyphenylenether in einer Tablettierpresse mit entsprechenden Einsätzen unmittelbar zu Kompaktatteilchen bzw. Agglomeraten der gewünschten Größe verpreßt wird. Insgesamt haben sich Teilchengrößen der so hergestellten Agglomerate von etwa 0,5 mm bis etwa 20 mm für die nachfolgende Verarbeitung als besonders günstig erwiesen.

Zweck des Verdichtens und/oder Sinterns des pulverförmigen Polyphenylenethers ist die Entfernung der in der lockeren Schüttung des Pulvers enthaltenen Luft. Je nach Schüttgewicht des Pulvers können Verdichtungsverhältnisse von etwa 1:1,1 bis etwa 1:3 erforderlich sein, wodurch Kompaktate einer Dichte von etwa 0,5 bis 1,1 g/cm³ entstehen.

Durch die Kompaktierung ergibt sich eine deutliche Verringerung des Feingutanteils, so daß die Gefahr von Staubexplosionen drastisch herabgesetzt ist. Darüber hinaus wird auch die Inhalationsgefahr von Polymerstaub wesentlich reduziert. Weitere Vorteile sind eine bessere Dosierbarkeit und verminderte elektrostatische Aufladung der Komponente A.

Die so vorbereitete Komponente A wird nachfolgend in einen Extruder o. dgl. eingespeist, mit einem vinylaromatischen Polymeren (Komponente B) und gegebenenfalls weiteren Komponenten (Zusatztoffe) vermischt und aufgeschmolzen.

Vorzugsweise wird als Komponente B ein vinylaromatisches Polymer verwendet, das mit dem eingesetzten Polyphenylenether verträglich ist.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen eignen sich insbesondere Styrol, ferner die kern- oder seitenketten-alkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts M_{w} von 100 bis 300 000 aufweisen, die nach üblichen Methoden bestimmt werden können.

Als Comonomere zur Herstellung von Copolymerisaten kommen z. B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder n-alkylsubstituierten Derivate mit 1 - 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in den US-A-4 360 618 und 4 405 753 sowie in der Veröffentlichung von J.R. Fried, G.A. Hanna, Polymer Eng. Scie. Band 22 (1982) Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980) beschrieben sind. Die Copolymerisate haben im allgemeinen Gewichtsmittel des Molekulargewichtes (M_{w}) von 10 000 bis 300 000, die nach üblichen Methoden bestimmt werden können.

Bei der Komponente B) handelt es sich vorzugsweise um schlagfest modifiziertes Polystyrol, dessen Kautschukgehalt im allgemeinen 3 bis 20 Gew.-%, vorzugsweise 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-A-2 694 692 beschrieben ist, und Verfahren zur Massesuspensionspolymerisation, wie sie beispielsweise in der US-A-2 862 906 beschrieben ist. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16 - 34 (1963), unter -20°C besitzen.

Es können auch Mischungen von schlagfest modifizierten und nicht-schlagfest modifizierten vinylaromatischen Polymeren eingesetzt werden, wobei das Mischungsverhältnis beliebig ist.

Als Zusatzstoffe seien Schlagzähmodifier genannt, die in Mengen bis zu 20 Gew.-%, bevorzugt bis zu 15 Gew.-% enthalten sein können und welche verschieden von Komponente B) sind.

Geeignet sind übliche Kautschuke, z.B. Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z.B. in betracht: Acrylnitrilbutadienkautschuk, hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau M1M2-, M1M2M1M2-, M1M2M1- oder M1M2M1', wobei diese Blockpolymerisate auch Segmente mit statistischer Verteilung enthalten können sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammenfassend in "Ullmanns Encyklopädie der Technischen Chemie", 4. Auflage, Bd. 13, Seiten 595 bis 634, Verlag Chemie GmbH, Weinheim 1977, beschrieben.

Als Zusatzstoffe seien genannt Hitze- und Lichtstabilistoren, Gleit- und Entformungsmittel, Färbemittel, wie Farbstoffe und Pigmente in üblichen Mengen. Weitere Zusatzstoffe und Pigmente in üblichen Mengen. Weitere Zusatzstoffe sind Verstärkungsmittel wie Glasfasern, Asbestfasern, Kohlenstoff-Fasern, aromatische Polyamidfasrn und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Pigmente kommen z.B. in Frage TiO₂ und Ruße.

Die Komponenten A und B sowie gegebenenfalls die Zusatzstoffe werden im allgemeinen einzeln in einen Extruder oder dergleichen eingebracht, welcher an sich bekannt und handelsüblich ist. Besonders geeignet sind selbstreinigende, zweiwellige Schneckenextruder mit im gleichen Sinne rotierenden Schneckenwellen und zonenweiser Beheizung bzw. Kühlung des Gehäuses.

Zunächst werden in eine erste Zone die Agglomerate der Komponente A eingespeist und in eine zweite Zone gefördert. Die Schneckenwellen in dieser ersten Zone sind daher förderwirksam ausgebildet, wobei die erste Zone eine Länge vom 2- bis 10-fachen, vorzugsweise vom 3- bis 6-fachen des Schneckendurchmessers aufweist. Die erste Zone kann beheizt oder auch gekühlt werden. Auf alle Fälle wird in dieser ersten Zone bei einer Temperatur unterhalb der Schmelztemperatur der Komponente A gefahren, bei der ein Klumpen und Kleben der Agglomerate vermieden wird. In diese erste Zone können zusätzlich zu der Komponente A die Komponente B sowie gegebenenfalls auch noch weitere, insbesondere feste Mischungsbestandteile eingespeist werden, wobei hierfür vor allem polymere Zusatzstoffe in Betracht kommen. Dabei kann die Komponente B an einer oder mehreren Stellen zudosiert werden. Nach einer besonders vorteilhaften Ausführungsform des Verfahrens können die Komponente B und die Zusatzstoffe vor dem Einspeisen in den Extruder miteinander vermengt werden.

Aus dieser ersten Zone werden das oder die thermoplastisch verarbeitbaren Polymeren sowie die gegebenenfalls eingespeisten Zusatzstoffe in eine zweite Zone gefördert, in die alle weiteren Zusatz- und/oder Hilfsstoffe zudosiert und alle Mischungsbestandteile unter Aufschmelzen der thermoplastisch verarbeitbaren Polymeren homogen miteinander vermischt werden.

Die Temperatur in der zweiten Zone des Extruders wird so gehalten, daß sie zum Aufschmelzen der thermoplastisch verarbeitbaren Polymeren sowie zum homogenen Vermischen der einzelnen Bestandteile hinreichend ist, ohne daß hierbei eine thermische Schädigung der Produkte erfolgt. Im allgemeinen wird diese zweite Zone auf Temperaturen (Heiztemperatur des Extruders) zwischen etwa 200°C und etwa 350°C, vorzugsweise zwischen 250°C und 300°C aufgeheizt und die Temperatur so geführt, daß die Temperatur der Schmelze mindestens 5 bis 15°C über der Erweichungstemperatur des Gemisches liegt. Die Länge dieser zweiten Zone beträgt im allgemeinen das 10- bis 50-fache, vorzugsweise das 12- bis 36-fache, des Schneckendurchmessers. Die Schnecken im hinteren Teil der zweiten Zone sind dabei so ausgebildet, däß man einen optimalen Misch- und Homogenisierungseffekt erhält. Beispielsweise können die zum Mischen und Homogenisieren bekannten und üblichen Knetscheiben-Schneckenelemente eingesetzt werden, wodurch eine intensive Quervermischung und gute Dispergierwirkung durch Erzeugung von Scherkraftfeldern unterschiedlicher Stärke bewirkt wird. Es hat sich als zweckmäßig erwiesen, mit Schergeschwindigkeiten von 200 bis 1800 sec⁻¹, vorzugsweise von 350 bis 850 sec⁻¹ zu arbeiten. Die zweite Zone kann auch in mehreren Abschnitten unterschiedlich temperiert werden, so daß beispielsweise die Temperatur in dem vorderen Teil, in dem die Komponente B und die Zusatzstoffe eingespeist werden, niedriger liegt als in dem hinteren Teil, in dem das Homogenisieren erfolgt. Außerdem kann diese zweite Zone einen Entgasungsstutzen tragen, um flüchtige Anteile oder Hilfsstoffe zu entfernen.

Nach der Entgasung wird das nach dem Verfahren hergestellte Gemisch aus dem Extruder ausgetragen und anschließend in an sich bekannter Weise weiterverarbeitet.

Die mittlere Verweilzeit der Produkte in dem Extruder beträgt im allgemeinen 0,5 bis 10 Minuten, vorzugsweise 1 bis 5 Minuten. Bei längeren Verweilzeiten besteht die Gefahr, thermisch geschädigte Produkte zu erhalten. Durch die Selbstreinigung der Schnecken wird ein Verkleben bzw. Verkrusten der Schneckenoberflächen verhindert. Der Einsatz der selbstreinigenden Schnecken trägt daher wesentlich zur Vermeidung von Inhomogenitäten in den thermoplastischen Formmassen bei.

Die erfindungsgemäß hergestellten Formmassen können zu 99 bis 1 Gew.-%, vorzugsweise 80 bis 20 Gew.-% aus Polyphenylenether und 1 bis 99 Gew.-%, vorzugsweise 20 bis 80 Gew.-% aus einem vinylaromatischen Polymeren sowie gegebenenfalls aus 0 bis 50 Gew.-% Zusatzstoffen bestehen. Sie zeichnen sich durch gute mechanische Eigenschaften sowie eine hohe thermische Stabilität aus.

Derartige Formmassen eignen sich gut zur Herstellung von Formteilen aller Art, z. B. durch Spritzguß oder Extrusion. Sie können weiterhin dienen zur Herstellung von Folien und Halbzeug im Tiefzieh- oder Blasverfahren.

Auch die Herstellung von Schäumen ist möglich. Dazu werden die üblichen Schäumungshilfsmittel vor der Verarbeitung dem Granulat zugesetzt und homogen vermischt.

## Patentansprüche

1. Verfahren zur Herstellung thermoplastischer Formmassen auf der Basis von pulverförmigen Polyphenylenethern (Komponente A) und vinylaromatischen Polymeren (Komponente B) durch Schmelzextrusion bei etwa 200°C bis etwa 350°C, dadurch gekennzeichnet, daß der pulverförmige Polyphenylenether unter Druck und gegebenenfalls Wärme zu einem porösen Kompaktat verdichtet und/oder gesintert wird, in Form von Agglomeraten einer Teilchengröße von etwa 0,5 mm bis etwa 20 mm in einen Extruder oder dergleichen eingespeist, mit dem vinylaromatischen Polymeren und gegebenenfalls weiteren Komponenten (Zusatzstoffe) vermischt und aufgeschmolzen wird und das geschmolzene Gemisch extrudiert wird.

2. Verfahren nach Anspruch 1, dadurch gekennzeichnet, daß der pulverförmige Polyphenylenether bei Temperaturen von etwa 10°C bis etwa 150°C und einem Druck entsprechend einer Linienkraft von 1 bis 100 kN/cm verdichtet und/oder gesintert wird.

3. Verfahren nach Anspruch 1, dadurch gekennzeichnet, daß vor dem Einspeisen in den Extruder das vinylaromatische Polymer und die Zusatzstoffe miteinander vermengt werden.

4. Verfahren nach Anspruch 1, dadurch gekennzeichnet, daß das extrudierte Gemisch 99 bis 1 Gew.-% Polyphenylenether, 1 bis 99 Gew.-% schlagfest modifiziertes Polystyrol und gegebenenfalls 0 bis 50 Gew.-% Zusatzstoffe enthält.
